# EUROPEAN PATENT APPLICATION

(11) **EP 3 429 179 A1**
(43) Date of publication of application: **16.01.2019**
(21) Application number: 18181185.2
(22) Date of filing: 02.07.2018
(51) Int. Cl.: H04N 1/387

(54) **METHOD COMPUTER PROGRAM AND SYSTEM FOR CONSTRUCTING A PICTURE OF A DOCUMENT**

(30) Priority: 13.07.2017 GB 201711313
(71) Applicant: GB Group plc, London E14 9QD (GB)
(72) Inventor: Alitto, M Moneer, London, E14 9QD (GB); Helfawi, Humam, London, E14 9QD (GB)
(74) Representative: Armstrong, Rosemary

(57) **Abstract**

A method of constructing a picture of a document from a plurality of images of the document comprising (i) capturing the plurality of images of the document (10), (ii) detecting a representation of the document in a first captured image (12), (iii) de-warping the representation of the document in the first captured image to produce a first de-warped representation of the document (14), (iv) obtaining a type of the document and a reference picture of a document of the same type (16), (v) adjusting the first de-warped representation of the document to register with the reference picture and storing the adjusted first de-warped representation of the document as a first registered representation of the document (18), (vi) storing the first registered representation of the document as an accumulated representation of the document (20), (vii) detecting a representation of the document in a next captured image (22), (viii) de-warping the representation of the document in the next captured image to produce a next de-warped representation of the document (24), (ix) adjusting the next de-warped representation of the document to register with the accumulated representation of the document and storing the adjusted next de-warped representation of the document as a next registered representation of the document (26), (x) producing a constructed representation of the document by choosing an intensity of a pixel of the accumulated representation of the document or an intensity of a corresponding pixel of the next registered representation of the document and storing the chosen intensity in a corresponding pixel of the constructed representation of the document (28), (xi) storing the constructed representation of the document as the accumulated representation of the document (30), (xii) applying at least one stop condition to the accumulated representation of the document (32), and (xiii) if the stop condition is met accepting the accumulated representation of the document as a picture of the document, or if the stop condition is not met repeating steps (vii) to (xiii) for a next captured image of the document (34).

## Description

### Field of the Invention

The invention relates to constructing a picture of a document from a plurality of images of the document and particularly to the construction of pictures of documents used in customer on-boarding processes, e.g. passports, identification cards, driving licences and utility bills.

### Background to the Invention

There are various customer on-boarding processes in which it is necessary to be able to produce a picture of a document. These include processes, for example, of opening a bank account or hiring a car. In these processes, it is necessary to be able to obtain accurate pictures of the documents, in order to be able to extract accurately information from the documents. The circumstances under which an image of a document is produced has an effect on the quality of the image and whether or not the image can be utilised to construct a picture of the document. Such image production circumstances can include, for example, blurring, reflection, glare, lighting conditions, positioning and orientation of the document and any overlay of objects covering part of the document. A number of picture construction techniques exist, at least some of which have associated problems. In some cases, it is possible to produce several images of a document and to use these together to construct an enhanced-quality final picture of the document. It is an object of the invention to provide an picture construction method which provides a better quality, useable final picture.

### Summary of the Invention

According to a first aspect of the invention there is provided a method of constructing a picture of a document from a plurality of images of the document, the method comprising:
(i) capturing the plurality of images of the document,
(ii) detecting a representation of the document in a first captured image,
(iii) de-warping the representation of the document in the first captured image to produce a first de-warped representation of the document,
(iv) obtaining a type of the document and a reference picture of a document of the same type,
(v) adjusting the first de-warped representation of the document to register with the reference picture and storing the adjusted first de-warped representation of the document as a first registered representation of the document,
(vi) storing the first registered representation of the document as an accumulated representation of the document,
(vii) detecting a representation of the document in a next captured image,
(viii) de-warping the representation of the document in the next captured image to produce a next de-warped representation of the document,
(ix) adjusting the next de-warped representation of the document to register with the accumulated representation of the document and storing the adjusted next de-warped representation of the document as a next registered representation of the document,
(x) producing a constructed representation of the document by choosing an intensity of a pixel of the accumulated representation of the document or an intensity of a corresponding pixel of the next registered representation of the document and storing the chosen intensity in a corresponding pixel of the constructed representation of the document,
(xi) storing the constructed representation of the document as the accumulated representation of the document,
(xii) applying at least one stop condition to the accumulated representation of the document, and
(xiii) if the stop condition is met accepting the accumulated representation of the document as a picture of the document, and if the stop condition is not met repeating steps (vii) to (xiii) for a next captured image of the document.

Capturing the plurality of captured images of the document may comprise instructing a user to use an image capture device to capture the images. The plurality of images of the document may comprise a time series of photographs of the document. The image capture device may be a camera. The camera may be provided in a mobile phone. The plurality of images of the document may comprise a time series of frames of a video. The image capture device may be a video recorder. The video recorder may be provided in a mobile phone. The plurality of images of the document may comprise a time series of scans of the document. The image capture device may be a scanner. Capturing the plurality of images of the document may comprise the image capture device receiving the images from a remote location.

The plurality of captured images of the document may be acquired under different image production circumstances, such as varying light conditions, e.g. reflection and/or glare, and various document orientations. It is desirable to use the plurality of captured images of the document to construct a picture of the document which has the best quality that can be achieved from the plurality of captured images of the document.

Detecting a representation of the document in the first captured image may comprise detecting a plurality of estimated corner point locations of the document in the first captured image. This may carried out manually or by using a known, software-based, detection method.

De-warping the representation of the document in the first captured image to produce a first de-warped representation of the document may comprise calculating a transformation for de-warping of the representation of the document in the first captured image and applying the transformation to the representation of the document in the first captured image.

Calculating the transformation for de-warping of the representation of the document in the first captured image may comprise using the plurality of estimated corner point locations of the document in the first captured image. The transformation may de-warp the representation of the document by flattening the representation of the document.

Applying the transformation to the representation of the document in the first captured image may comprise multiplying the transformation with locations of pixels of the representation of the document in the first captured image to produce locations of corresponding pixels of the first de-warped representation of the document. The method may further comprise applying extracted intensities of the pixels of the representation of the document in the first captured image to the corresponding pixels of the first de-warped representation of the document. The method may further comprise interpolating intensities of pixels of the representation of the document in the first captured image to determine intensities of pixels of the first de-warped representation of the document.

Obtaining a type of the document and the reference picture may comprise receiving the type of the document and the reference picture of a document of the same type from a user. Obtaining a type of the document and the reference picture may comprise receiving the type of the document and the reference picture of a document of the same type from a software-based recognition engine.

Adjusting the first de-warped representation of the document to register with the reference picture may comprise aligning locations of pixels of first de-warped representation of the document with locations of corresponding pixels of the reference picture to produce locations of pixels of the adjusted first de-warped representation of the document.

Aligning the locations of the pixels of the first de-warped representation of the document with the locations of the corresponding pixels of the reference picture may comprise any of rotation, translation, scaling, adjustment of the locations of the pixels of the first de-warped representation of the document to produce locations of pixels of the adjusted first de-warped representation of the document.

Aligning the locations of the pixels of the first de-warped representation of the document with the locations of the corresponding pixels of the reference picture may comprise calculating an alignment transformation and applying the alignment transformation to the locations of the pixels of the first de-warped representation of the document.

Calculating the alignment transformation may comprise using an iterative technique to change, one-by-one, the relative rotation, translation, scaling, adjustment of the first de-warped representation of the document and the reference picture to minimise any error between the first de-warped representation of the document and the reference picture.

Applying the alignment transformation to the locations of the pixels of the first de-warped representation of the document may comprise multiplying the alignment transformation with the locations of the pixels of the first de-warped representation of the document to produce locations of pixels of the adjusted first de-warped representation of the document.

Storing the adjusted first de-warped representation of the document as the first registered representation of the document may comprise storing the locations of the pixels of the adjusted first de-warped representation of the document as locations of the pixels of the first registered representation of the document and storing intensities of the pixels of the first de-warped representation of the document as intensities of corresponding pixels of the first registered representation of the document. The method may further comprise interpolating intensities of pixels of the first de-warped representation of the document to determine intensities of pixels of the first registered representation of the document.

Storing the first registered representation of the document as the accumulated representation of the document may comprise storing a two dimensional matrix of intensities of pixels of the first registered representation.

Detecting a representation of the document in the next captured image may comprise detecting a plurality of estimated corner point locations of the document in the next captured image. This may carried out manually or by using a known, software-based, detection method.

De-warping the representation of the document in the next captured image to produce a next de-warped representation of the document may comprise calculating a transformation for de-warping of the representation of the document in the next captured image and applying the transformation to the representation of the document in the next captured image.

Calculating the transformation for de-warping of the representation of the document in the next captured image may comprise using the plurality of estimated corner point locations of the document in the next captured image. The transformation may de-warp the representation of the document by flattening the representation of the document.

Applying the transformation to the representation of the document in the next captured image may comprise multiplying the transformation with locations of pixels of the representation of the document in the next captured image to produce locations of corresponding pixels of the next de-warped representation of the document. The method may further comprise applying extracted intensities of the pixels of the representation of the document in the next captured image to the corresponding pixels of the next de-warped representation of the document. The method may further comprise interpolating intensities of pixels of the representation of the document in the next captured image to determine intensities of pixels of the next de-warped representation of the document.

Adjusting the next de-warped representation of the document to register with the accumulated representation of the document may comprise calculating a registration transformation which minimises an intensity difference between the next de-warped representation of the document and the accumulated representation of the document and applying the registration transformation to the next de-warped representation of the document to produce locations of pixels of the adjusted next registered representation of the document.

Applying the registration transformation to the next de-warped representation of the document may comprise multiplying the registration transformation with locations of pixels of the next de-warped representation of the document to produce locations of pixels of the adjusted next de-warped representation of the document.

Storing the adjusted next de-warped representation of the document as the next registered representation of the document may comprise storing the locations of the pixels of the adjusted next de-warped representation of the document as locations of the pixels of the next registered representation of the document and storing intensities of the pixels of the next de-warped representation of the document as intensities of corresponding pixels of the next registered representation of the document. The method may further comprise interpolating intensities of pixels of the next de-warped representation of the document to determine intensities of pixels of the next registered representation of the document.

Choosing an intensity of a pixel of the accumulated representation of the document or an intensity of a corresponding pixel of the next registered representation of the document may comprise applying a blur condition to the next registered representation of the document. Applying the blur test may comprise, for a pixel of the next registered representation of the document, if the blur condition is met, choosing the intensity of the corresponding pixel of the accumulated representation of the document as an intensity of a corresponding pixel of the constructed representation of the document. Applying the blur test may comprise, for a pixel of the next registered representation of the document, if the blur condition is not met, choosing the intensity of the pixel of the next registered representation of the document as an intensity of a corresponding pixel of the constructed representation of the document.

Storing the constructed representation of the document as the accumulated representation of the document may comprise storing a two dimensional matrix of intensities of pixels of the constructed representation of the document.

The stop condition applied to the accumulated representation of the document may comprise measuring changes in pixel intensity of the accumulated representation of the document over a number of iterations and applying an intensity change threshold beneath which the stop condition is met. The stop condition applied to the accumulated representation of the document may comprise determining the number of iterations and applying an iteration threshold above which the stop condition is met. The iteration threshold may be 100 iterations.

The output of the picture construction method may be a two dimensional intensity matrix of the picture of the document comprising the best intensity values constructed from the plurality of images of the document used in the method.

According to a second aspect of the invention there is provided a document picture construction computer program, tangibly embodied on a non-transitory computer readable medium, the computer program including instructions for causing a computer to execute the method of constructing a picture of a document from a plurality of images of the document of the first aspect of the invention.

According to a third aspect of the invention there is provided a system for constructing a picture of a document from a plurality of images of the document comprising:
(i) an image capture device which captures the plurality of images of the document,
(ii) a detection module which detects a representation of the document in a first captured image and which detects a representation of the document in a next captured image,
(iii) a de-warp module which de-warps the representation of the document in the first captured image to produce a first de-warped representation of the document and which de-warps the representation of the document in the next captured image to produce a next de-warped representation of the document,
(iv) a reference document module which obtains a type of the document and a reference picture of a document of the same type,
(v) a registration module which adjusts the first de-warped representation of the document to register with the reference picture and stores the adjusted first de-warped representation of the document as a first registered representation of the document and which adjusts the next de-warped representation of the document to register with the accumulated representation of the document and stores the adjusted next de-warped representation of the document as a next registered representation of the document,
(vi) a storage module which stores the first registered representation of the document as an accumulated representation of the document and which stores the constructed representation of the document as the accumulated representation of the document,
(vii) a production module which produces a constructed representation of the document by choosing an intensity of a pixel of the accumulated representation of the document or an intensity of a corresponding pixel of the next registered representation of the document and storing the chosen intensity in a corresponding pixel of the constructed representation of the document, and
(viii) a stop module which applies at least one stop condition to the accumulated representation of the document, and if the stop condition is met accepts the accumulated representation of the document as a picture of the document, and if the stop condition is not met repeats for a next captured image of the document.

### Description of the Invention

Embodiments of the invention will now be described by way of example with reference to the accompanying drawings in which :
Figure 1 is a flow chart of a method of constructing a picture of a document from a plurality of images of the document according to the first aspect of the invention;
Figure 2 is a flow chart showing the method of Figure 1 in more detail, and
Figure 3 is a schematic representation of the system for constructing a picture of a document from a plurality of images of the document according to the third aspect of the invention.

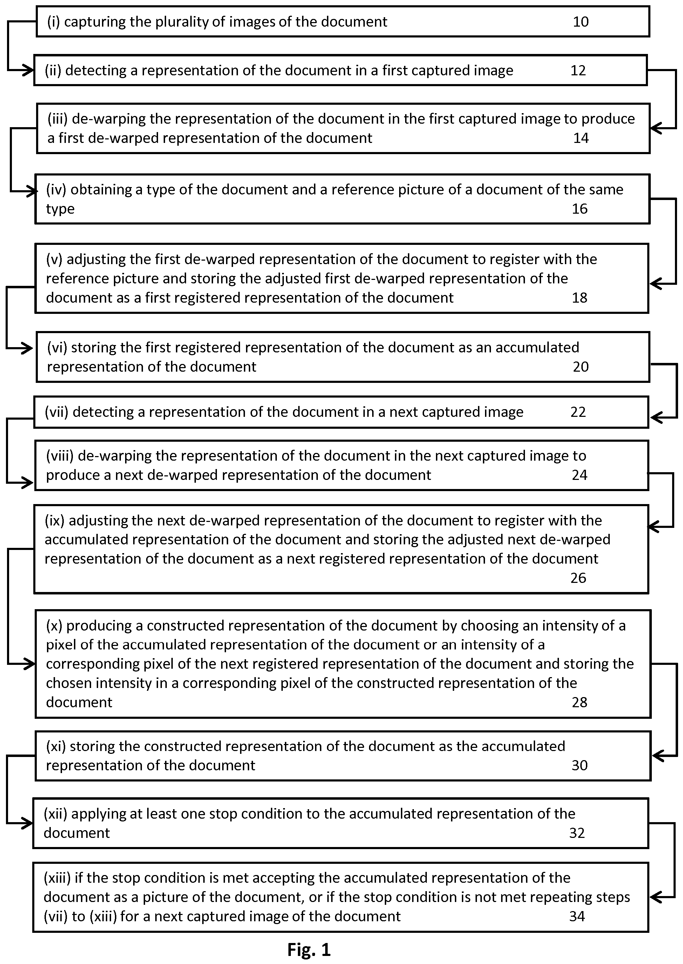

Referring to Figure 1, the method of constructing a picture of a document from a plurality of images of the document comprises:
(i) capturing the plurality of images of the document 10,
(ii) detecting a representation of the document in a first captured image 12,
(iii) de-warping the representation of the document in the first captured image produce a first de-warped representation of the document 14,
(iv) obtaining a type of the document and a reference picture of a document of the same type 16,
(v) adjusting the first de-warped representation of the document to register with the reference picture and storing the adjusted first de-warped representation of the document as a first registered representation of the document 18,
(vi) storing the first registered representation of the document as an accumulated representation of the document 20,
(vii) detecting a representation of the document in a next captured image 22,
(viii) de-warping the representation of the document in the next captured image produce a next de-warped representation of the document 24,
(ix) adjusting the next de-warped representation of the document to register with the accumulated representation of the document and storing the adjusted next de-warped representation of the document as a next registered representation of the document 26,
(x) producing a constructed representation of the document by choosing an intensity of a pixel of the accumulated representation of the document or an intensity of a corresponding pixel of the next registered representation of the document and storing the chosen intensity in a corresponding pixel of the constructed representation of the document 28,
(xi) storing the constructed representation of the document as the accumulated representation of the document 30,
(xii) applying at least one stop condition to the accumulated representation of the document 32, and
(xiii) if the stop condition is met accepting the accumulated representation of the document as a picture of the document, and if the stop condition is not met repeating steps (vii) to (xiii) for a next captured image of the document 34.

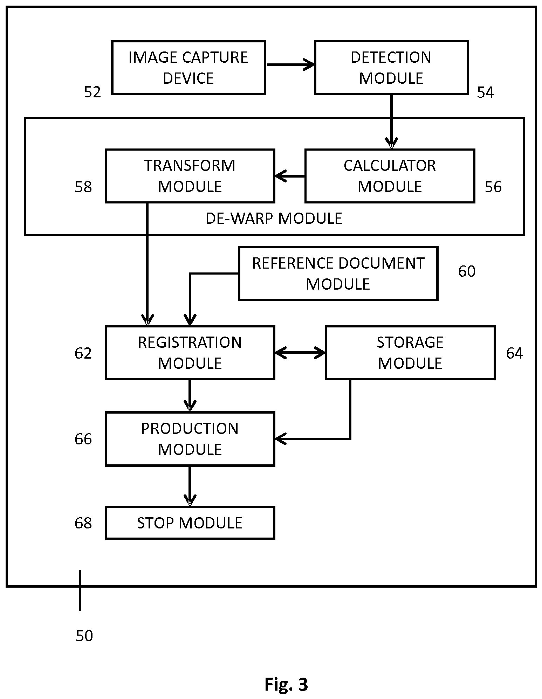

Referring to Figure 3, the system 50 for constructing a picture of a document from a plurality of images of the document comprises an image capture device 52, a detection module 54, a de-warp module comprising a calculator module 56 and a transform module 58, a reference document module 60, a registration module 62, a storage module 64, a production module 66 and a stop module 68.

The modules of the system 50 may be provided in hardware, software or a combination of hardware and software. One or more of the modules may be combined. The modules may communicate via wired connections, or wireless connections or a combination or wired and wireless connections. The modules operate to carry out the method of the first aspect of the invention using the instructions of the document picture construction computer program of the second aspect of the invention.

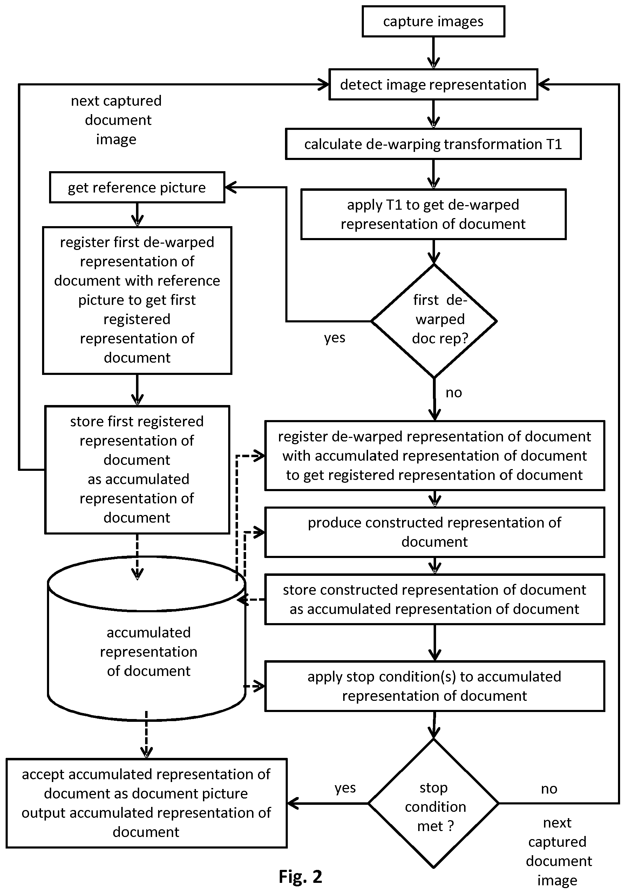

Referring to Figures 2 and 3, the image capture device 52 of the system 50 first captures the plurality of images of the document. In this embodiment, the image capture device 52 is a camera provided in a mobile phone of a user of the system 50 and the plurality of captured images of the document comprise a time series of photographs of the document. The entire picture construction system 50 is provided on the mobile phone of the user. It will be appreciated that the system 50 could be provided on a processing module, such as a server, of an operator of the system, in which case the image capture device may capture the plurality of images of the document by receiving the images from a remote location.

The detection module 54 then detects a representation of the document in a first captured image. This comprises detecting a plurality of estimated corner point locations of the document in the first captured image, which may be carried out manually or by using a known, software-based, detection method.

The calculator module 56 of the de-warp module calculates a transformation T1 for de-warping of the representation of the document in the first captured image. This comprises using the plurality of estimated corner point locations of the document in the first captured image. The transformation T1 de-warps the representation of the document by flattening.

The transform module 58 of the de-warp module applies the transformation to the representation of the document in the first captured image to produce a first de-warped representation of the document. This comprises multiplying the transformation with locations of pixels of the representation of the document in the first captured image to produce locations of corresponding pixels of the first de-warped representation of the document. This further comprises applying extracted intensities of the pixels of the representation of the document in the first captured image to the corresponding pixels of the first de-warped representation of the document and interpolating intensities of pixels of the representation of the document in the first captured image to determine intensities of pixels of the first de-warped representation of the document.

The reference document module 60 obtains a type of the document and a reference picture of a document of the same type. This may comprise receiving the type of the document and the reference picture of a document of the same type from a user or from a software-based recognition engine.

The registration module 62 checks if the de-warped representation of the document is the first de-warped representation of the document. If this is the case, the registration module 62 adjusts the first de-warped representation of the document to register with the reference picture and stores the adjusted first de-warped representation of the document as a first registered representation of the document.

Adjusting the first de-warped representation of the document to register with the reference picture comprises aligning locations of pixels of first de-warped representation of the document with locations of corresponding pixels of the reference picture to produce locations of pixels of the adjusted first de-warped representation of the document. Aligning locations of the pixels of the first de-warped representation of the document with the locations of the corresponding pixels of the reference picture comprises any of rotation, translation, scaling, adjustment of the first de-warped representation of the document to produce locations of pixels of the adjusted first de-warped representation of the document.

Storing the adjusted first de-warped representation of the document as the first registered representation of the document comprises storing the locations of the pixels of the adjusted first de-warped representation of the document as locations of the pixels of the first registered representation of the document and storing intensities of the pixels of the first de-warped representation of the document as intensities of corresponding pixels of the first registered representation of the document.

The storage module 64 stores the first registered representation of the document as an accumulated representation of the document, which comprises storing a two dimensional matrix of intensities of pixels of the first registered representation.

The detection module 54 then detects a representation of the document in a next captured image, in the same manner as used with the first captured image.

The calculator module 56 of the de-warp module calculates a transformation for de-warping of the representation of the document in the next captured image, in the same manner as used with the first captured image.

The transform module 58 of the de-warp module then applies the transformation to the representation of the document in the next captured image to produce a next de-warped representation of the document, in the same manner as used with the first captured image.

The registration module 62 checks if the de-warped representation of the document is the first de-warped representation of the document and, as this is not the case, proceeds to adjust the next de-warped representation of the document to register with the accumulated representation of the document and store the adjusted next de-warped representation of the document as a next registered representation of the document.

Adjusting the next de-warped representation of the document to register with the accumulated representation of the document comprises calculating a registration transformation which minimises an intensity difference between the next de-warped representation of the document and the accumulated representation of the document and applying the registration transformation to the next de-warped representation of the document. Applying the registration transformation to the next de-warped representation of the document comprises multiplying the registration transformation with locations of pixels of the next de-warped representation of the document to produce locations of pixels of the adjusted next de-warped representation of the document.

Storing the adjusted next de-warped representation of the document as the next registered representation of the document comprises storing the locations of the pixels of the adjusted next de-warped representation of the document as locations of the pixels of the next registered representation of the document and storing intensities of the pixels of the next de-warped representation of the document as intensities of corresponding pixels of the next registered representation of the document.

The production module 66 then produces a constructed representation of the document by choosing an intensity of a pixel of the accumulated representation of the document or an intensity of a corresponding pixel of the next registered representation of the document and storing the chosen intensity in a corresponding pixel of the constructed representation of the document. Choosing an intensity of a pixel of the accumulated representation of the document or an intensity of a corresponding pixel of the next registered representation of the document comprises applying a blur condition to the next registered representation of the document. Applying the blur test, for a pixel of the next registered representation of the document, if the blur condition is met, choosing the intensity of the corresponding pixel of the accumulated representation of the document as an intensity value of a corresponding pixel of the constructed representation of the document. Applying the blur test, for a pixel of the next registered representation of the document, if the blur condition is not met, choosing the intensity of the pixel of the next registered representation of the document as an intensity value of a corresponding pixel of the constructed representation of the document.

The storage module 64 stores the constructed representation of the document as the accumulated representation of the document, by storing a two dimensional matrix of intensities of pixels of the constructed representation of the document.

The stop module 68 then applies two stop conditions to the accumulated representation of the document. The first stop condition applied to the accumulated representation of the document comprises measuring changes in pixel intensity of the accumulated representation of the document over a number of iterations and applying an intensity change threshold beneath which the stop condition is met. The second stop condition applied to the accumulated representation of the document comprises determining the number of iterations and applying an iteration threshold above which the stop condition is met. The iteration threshold may be 100 iterations.

If either stop condition is met the accumulated representation of the document is accepted as a picture of the document, and a two dimensional intensity matrix of the accumulated representation of the document is output. This represents a picture of the document comprising the best intensity values constructed from the plurality of images of the document used in the method.

If both stop conditions are not met, the method repeats for a next captured image of the document.

## Claims

1. A method of constructing a picture of a document from a plurality of images of the document, the method comprising:
(i) capturing the plurality of images of the document,
(ii) detecting a representation of the document in a first captured image,
(iii) de-warping the representation of the document in the first captured image to produce a first de-warped representation of the document,
(iv) obtaining a type of the document and a reference picture of a document of the same type,
(v) adjusting the first de-warped representation of the document to register with the reference picture and storing the adjusted first de-warped representation of the document as a first registered representation of the document,
(vi) storing the first registered representation of the document as an accumulated representation of the document,
(vii) detecting a representation of the document in a next captured image,
(viii) de-warping the representation of the document in the next captured image to produce a next de-warped representation of the document,
(ix) adjusting the next de-warped representation of the document to register with the accumulated representation of the document and storing the adjusted next de-warped representation of the document as a next registered representation of the document,
(x) producing a constructed representation of the document by choosing an intensity of a pixel of the accumulated representation of the document or an intensity of a corresponding pixel of the next registered representation of the document and storing the chosen intensity in a corresponding pixel of the constructed representation of the document,
(xi) storing the constructed representation of the document as the accumulated representation of the document,
(xii) applying at least one stop condition to the accumulated representation of the document, and
(xiii) if the stop condition is met accepting the accumulated representation of the document as a picture of the document, or if the stop condition is not met repeating steps (vii) to (xiii) for a next captured image of the document.

2. A method according to claim 1 in which adjusting the first de-warped representation of the document to register with the reference picture comprises aligning locations of pixels of first de-warped representation of the document with locations of corresponding pixels of the reference picture to produce locations of pixels of the adjusted first de-warped representation of the document.

3. A method according to claim 2 in which aligning the locations of the pixels of the first de-warped representation of the document with the locations of the corresponding pixels of the reference picture comprises any of rotation, translation, scaling, adjustment of the first de-warped representation of the locations of the pixels of the first de-warped representation of the document to produce locations of pixels of the adjusted first de-warped representation of the document.

4. A method according to claim 2 in which aligning the locations of the pixels of the first de-warped representation of the document with the locations of the corresponding pixels of the reference picture comprises calculating an alignment transformation using an iterative technique to change, one-by-one, the relative rotation, translation, scaling, adjustment of the first de-warped representation of the document and the reference picture to minimise any error between the first de-warped representation of the document and the reference picture and applying the alignment transformation to the locations of the pixels of the first de-warped representation of the document.

5. A method according to claim 4 in which applying the alignment transformation to the locations of the pixels of the first de-warped representation of the document comprise multiplying the alignment transformation with the locations of the pixels of the first de-warped representation of the document to produce locations of pixels of the adjusted first de-warped representation of the document.

6. A method according to any of claims 2 to 5 in which storing the adjusted first de-warped representation of the document as the first registered representation of the document comprises storing the locations of the pixels of the adjusted first de-warped representation of the document as locations of the pixels of the first registered representation of the document and storing intensities of the pixels of the first de-warped representation of the document as intensities of corresponding pixels of the first registered representation of the document.

7. A method according to any preceding claim in which adjusting the next de-warped representation of the document to register with the accumulated representation of the document comprises calculating a registration transformation minimises an intensity difference between the next de-warped representation of the document and the accumulated representation of the document and applying the registration transformation to the next de-warped representation of the document to produce locations of pixels of the adjusted next registered representation of the document.

8. A method according to claim 7 in which applying the registration transformation to the next de-warped representation of the document comprises multiplying the registration transformation with locations of pixels of the next de-warped representation of the document to produce locations of pixels of the adjusted next registered representation of the document.

9. A method according to claim 7 or claim 8 in which storing the adjusted next de-warped representation of the document as the next registered representation of the document may comprise storing the locations of the pixels of the adjusted next de-warped representation of the document as locations of the pixels of the next registered representation of the document and storing intensities of the pixels of the next de-warped representation of the document as intensities of corresponding pixels of the next registered representation of the document.

10. A method according to any preceding claim in which choosing an intensity of a pixel of the accumulated representation of the document or an intensity of a corresponding pixel of the next registered representation of the document comprises applying a blur condition to the next registered representation of the document and for a pixel of the next registered representation of the document, if the blur condition is met, choosing the intensity of the corresponding pixel of the accumulated representation of the document as an intensity of a corresponding pixel of the constructed representation of the document, and for a pixel of the next registered representation of the document, if the blur condition is not met, choosing the intensity of the pixel of the next registered representation of the document as an intensity of a corresponding pixel of the constructed representation of the document.

11. A method according to any preceding claim in which the stop condition applied to the accumulated representation of the document comprises measuring changes in pixel intensity of the accumulated representation of the document over a number of iterations and applying an intensity change threshold beneath which the stop condition is met.

12. A method according to any preceding claim in which the stop condition applied to the accumulated representation of the document comprises determining the number of iterations and applying an iteration threshold above which the stop condition is met.

13. A method according to any preceding claim in which the output of the method is a two dimensional intensity matrix of the picture of the document comprising the best intensity values constructed from the plurality of images of the document used in the method.

14. A document picture construction computer program, tangibly embodied on a non-transitory computer readable medium, the computer program including instructions for causing a computer to execute the method of constructing a picture of a document from a plurality of images of the document of claims 1 to 13.

15. A system for constructing a picture of a document from a plurality of images of the document comprising:
(i) an image capture device which captures the plurality of images of the document,
(ii) a detection module which detects a representation of the document in a first captured image and which detects a representation of the document in a next captured image,
(iii) a de-warp module which de-warps the representation of the document in the first captured image to produce a first de-warped representation of the document and which de-warps the representation of the document in the next captured image to produce a next de-warped representation of the document,
(iv) a reference document module which obtains a type of the document and a reference picture of a document of the same type,
(v) a registration module which adjusts the first de-warped representation of the document to register with the reference picture and stores the adjusted first de-warped representation of the document as a first registered representation of the document and which adjusts the next de-warped representation of the document to register with the accumulated representation of the document and stores the adjusted next de-warped representation of the document as a next registered representation of the document,
(vi) a storage module which stores the first registered representation of the document as an accumulated representation of the document and which stores the constructed representation of the document as the accumulated representation of the document,
(vii) a production module which produces a constructed representation of the document by choosing an intensity of a pixel of the accumulated representation of the document or an intensity of a corresponding pixel of the next registered representation of the document and storing the chosen intensity in a corresponding pixel of the constructed representation of the document, and
(viii) a stop module which applies at least one stop condition to the accumulated representation of the document, and if the stop condition is met accepts the accumulated representation of the document as a picture of the document, or if the stop condition is not met repeats for a next captured image of the document.
